# EUROPEAN PATENT APPLICATION

(11) **EP 1 860 866 A1**
(43) Date of publication of application: **28.11.2007**
(21) Application number: 06252763.5
(22) Date of filing: 26.05.2006
(51) Int. Cl.: H04N 5/04, H04N 7/24, H04N 7/62, H04N 5/44

(54) **Audio-visual reception**

(71) Applicant: British Telecommunications Public Limited Company, London EC1A 7AJ (GB)
(72) Inventor: Strullo, Ben, Felixstone, Ipswich IP11 7JW (GB); Morphett, Jason, Halesworth, Suffolk IP19 8HG (GB); Jacobs, Richard James, Woodbrige, Suffolk IP12 4EA (GB); Bissell, Robert Andrew, Ipswich, Suffolk IP5 3TU (GB)
(74) Representative: Lloyd, Barry George William

(57) **Abstract**

Video signals pass from aerial 2 via set-top box 3 with a receiver 31 and decoder 32 to a TV receiver. Audio (typically as an alternative to the usual audio) is fed from server 5 via decoder 44 to speakers 7. Timestamps extracted from the video are sent from wireless transmitter 33 to receiver 43 where they are compared at 45 with audio timestamps and the delay of a variable audio buffer 44 appropriately adjusted to achieve synchronisation.

## Description

The present invention is concerned with audio-visual reception systems. Broadcast and 'On Demand' TV systems usually associate a single audio stream with a video stream (though some hotel & aircraft VoD systems offer a small choice of languages), which is fixed at the time of content editing. This assumes that all customers have the same requirements and provides an inflexible customer experience.

We anticipate services that will provide alternative audio streams, via an online network, that will augment the broadcast or on demand video content. This will enable, amongst others, the following:
- Hearing impaired customers will be able to receive a 'clear speech' variant of the sound track that enables the dialogue to be easily distinguished from the background music etc.
- Additional languages would be provided for ethnically diverse communities
- Niche or cult alternative soundtracks could be provided by either service providers or 'fan clubs', for 'on demand' pre-recorded content

Such services create a requirement for an audio stream to be synchronised with a video stream being displayed by a separate device.

According to the present invention there is provided an audio-visual reception system comprising
a video receiving device, including means for extracting timing signals from a received video signal;
an audio receiving device physically separate from the video receiving device, the audio receiving means including means for extracting timing signals from a received audio signal;
variable delay means operable to adjust the differential delay between audio signals output by the audio receiving device and video signals output by the video receiving device;
control means operable to compare the timing signals extracted from the audio signal and those extracted from the video signal and to control the variable delay means in dependence thereon;
wherein one of the devices has at least a wireless transmitter and the other of the devices has at least a wireless receiver, that together form a wireless link via which one set of said extracted timing signals can be conveyed to the control means.

Other aspects of the invention are defined in the claims.

Embodiments of the invention provide a way to synchronise video with audio delivered separately perhaps over a different network. Typically we expect the video to delivered via a broadcast network and the audio delivered (probably on demand) over a different communications network. However, the invention could also be used whenever audio and video streams are subject to differing delays in transmission and decoding and then delivered separately to separate devices. An example is in video conferencing where the audio may need to go to a conferencing bridge and be delayed there. Conventionally the streams would then be delivered together through a single device which can resynchronise the streams if needed. However, it is sometimes convenient to deliver the audio and video over separate streams to separate devices (e.g. a TV and a phone). Then this invention becomes useful to synchronise the streams.

Some embodiments of the invention will now be described with reference to the accompanying drawing.

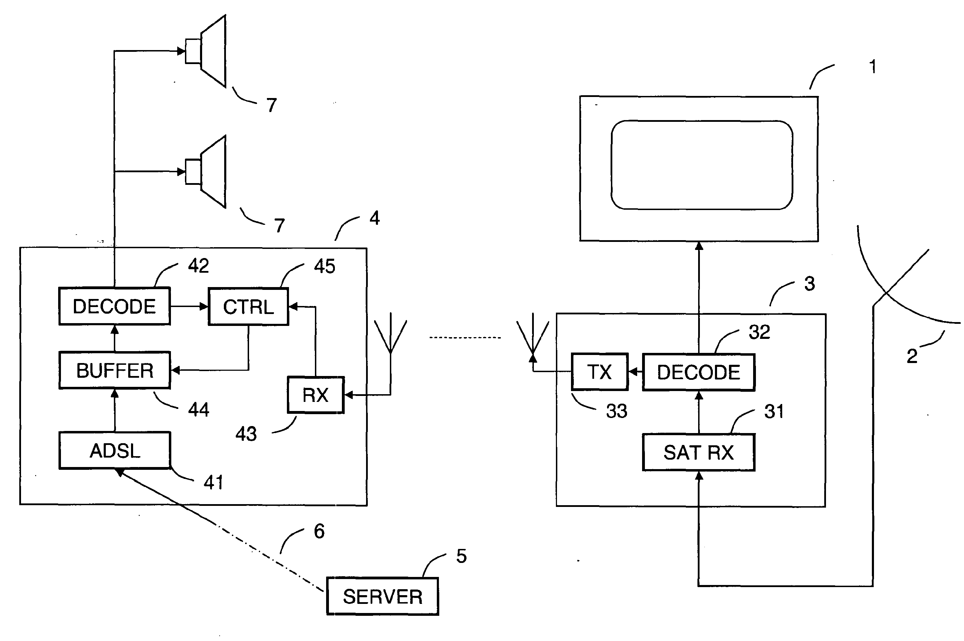

In Figure 1, a television receiver 1 receives satellite broadcasts via a dish aerial 2 and a set-top Box (STB) 3. If desired the set-top box may (or may not) incorporate personal video recorder (PVR) functionality. As is conventional, the set-top box contains a satellite receiver 31 and a video decoder 22 operating in accordance with an appropriate standard (MPEG2, in this example) and delivers decoded video and (optionally) audio to the television 1.

An alternative audio signal is received by a separate audio device 4: in this example it is received from a remote server 5 over a telephone line 6 via a broadband ADSL modem 41 inside the audio device 4. Although the most probable usage of this system is in the provision of an alternative audio signal, with the sound output of the television 1 turned off, it is not technically necessary that the original audio signal actually exists, in which case the "alternative" audio signal becomes merely "the" audio signal.

In this example the audio signal is formatted in accordance with the audio part of the MPEG2 specification, and thus the audio device 4 also contains an MPEG2 audio decoder 42. The audio output is fed to loudspeakers 7. If desired, the audio device 4 could be built into a complete audio "hi-fi" system, or even into a headset.

Returning to the set-top box 3, this also includes a transmitter 33 which is equipped to emit a local wireless signal (e.g. using infra-red or Bluetooth). The wireless channel is used to send out time stamps which specify the point reached in displaying the video. The timestamps used need to be derived from the video material. This can be done in different ways depending on the source of the video. In the case of the set-top box 3 or PVR this could be done by using the time stamps (either the "reference time stamp" or the "decoding time stamp") embedded in the MPEG2 Transport Stream received over the broadcast medium. For example, timestamps are embedded in the MPEG2 Transport Streams used in DVB-T. and DVB-S; the standards currently used for digital TV via terrestrial or satellite in the UK. The timestamp transmitted over the wireless channel would then be the timestamp associated with the currently displaying frame.

The wireless channel is received by a receiver 43 within the audio device. The audio device contains a variable length buffer 44 that is used to adjust the audio delay (possibly in conjunction with the server 5) so that it matches the timestamps issued by the set-top box 3. To do the adjustment the timestamps received over the wireless channel are delivered to a control unit 45 which compares them with timestamps available for the audio stream and representing the current audio playback point. In this example, this is done by supplying the audio to the audio device as an MPEG2 Transport Stream which will carry time stamps in the same way that the Transport Stream used by the set-top box 3 does; the decoder 42 sends the timestamp of the currently playing audio to the control unit 45. Alternatively, the audio device could communicate its time stamps (that is, those it has received from the set-top box) to a server which could use time stamps stored with the audio content for comparison.

In any case, the time stamps are compared (either at the audio device and/or the server). If the audio is ahead then it is buffered until the time stamps become equal and then presented to the used. If the video is ahead then the audio is skipped forward until the timestamps become equal. Once the audio is playing in synchronisation then the time stamps are only used to check that synchronisation is being maintained. The audio will then only be skipped or buffered if the mismatch in timestamps exceeds some minimum value.

The set-top box 3 may also buffer the video. This may be needed in the case when the user only realises that they need to arrange the delivery of the audio stream after viewing the first part of the video. For example, the video stream may include a list of URLs for alternative audio streams. This sort of buffering is commonplace in PVR systems (they can "pause live TV") but set-top box 3 could also do it.

The link between the set-top box 3 and the audio device 4 can be implemented with any one of a number of known wireless communications technologies. We will describe an implementation using the 802.11 b (Wi-Fi) technology but notable alternatives include infra-red (e.g. the IrDA standards) and BlueTooth. All of these technologies have the benefit that they are already supported by some portable audio devices such as mobile phones. But we expect new standards such as Ultra-Wide Bandwidth (UWB) also to become available over the next few years.

An important design choice to be made in the implementation of the wireless link is whether the set-top box 3 regularly emits a time stamp signal, or whether the audio device 4 connects to the set-top box 3 and requests a timestamp only when it needs one. Both of these techniques are feasible, particularly since the set-top box 3 is likely to be mains powered and hence have no shortage of power to use to generate wireless signals. The first option is simpler in that the wireless link only needs to be one-way, whereas in the second the transmitter 33 and receiver 43 both need to be transceivers. We describe a hybrid implementation in which both approaches are used.

In our example implementation, the audio device 4 explicitly requests a time stamp. To achieve this, the set-top box 3 implements an 802.11 b network in ad-hoc mode. In this mode, the audio device 4 can request a session with the set-top box 3. Once this is complete then the devices can send communications packets in both directions. It is then straightforward for the audio device 4 to send a packet to the set-top box 3 requesting a timestamp. The set-top box 3 will then respond with a packet containing the timestamp.

The audio device 4 can then buffer the audio (or skip ahead) until synchronisation is achieved.

If greater accuracy is required, then one may wish the audio device 4 to compensate for the small communications delay imposed by the processing of the wireless communications. It can judge this delay on the basis of the elapsed time from sending to receiving a response.

The described implementation allows synchronisation to be adjusted as demanded by the audio device 4. This would typically be at the beginning of the playback and at other times, as requested by the user of the audio device 4.

This implementation also allows the set-top box 3 to emit timestamps at other times, to cause the audio device 4 to change its synchronisation. This would be useful if the set-top box 3 is buffering the video playback, for example, using the "pausing live TV" features that are popular on PVRs. In this case the set-top box 3 would send an unsolicited timestamp to the audio device 4. The audio device 4 would respond by delaying or skipping ahead in the audio stream, as required to achieve synchronisation.

It might also be valuable to implement a "pause" signal that the set-top box 3 could send to the audio device 4 to indicate a temporary pause in the video stream. This would simplify maintaining synchronisation if the video is temporarily paused by the viewer. Other similar signals (such as fast forward or rewind) might also improve the user experience, though they are not necessary.

As described above, the set-top box extracts video timestamps; the audio device extracts audio timestamps; the set-top box sends the video timestamps to the audio device; and the audio device compared the timestamps and controls the audio buffer. However, other divisions of labour are possible: for example, the audio device could send the audio timestamps to the set-top box which then compares them with the video timestamps and sends buffer control instructions back to the audio device. Indeed, the variable buffer could be in the set-top box to adjust the video delay.

References herein to "wireless" links or devices are not limited to links using radio waves, but embrace any convenient form of communication without wires, including, *inter alia,* radio, microwaves, infrared, light or ultrasound.

Alternatively, a wire link could be used, for example an Ethernet or other local area network connection could be use, with appropriate transmitter and receiver in place of the wireless transmitter and receiver 33, 43.

If desired, the audio device could be arranged to receive more than one audio signal, for example to provide a multi-channel capability, perhaps with locally variable mixing, e.g. with separate channels for ambient, foreground, special effects and so forth. Each channel can be synchronised in the manner already described.

## Claims

1. An audio-visual reception system comprising
a video receiving device (3), including means for extracting timing signals from a received video signal;
an audio receiving device (4) physically separate from the video receiving device, the audio receiving means including means for extracting timing signals from a received audio signal;
variable delay means (44) operable to adjust the differential delay between audio signals output by the audio receiving device and video signals output by the video receiving device;
control means (45) operable to compare the timing signals extracted from the audio signal and those extracted from the video signal and to control the variable delay means in dependence thereon;
wherein one of the devices has at least a wireless transmitter (33) and the other of the devices has at least a wireless receiver (43), that together form a wireless link via which one set of said extracted timing signals can be conveyed to the control means.

2. A system according to claim 1 in which the control means are located in one of the devices and receives the timing signals from the other of the devices via the wireless link.

3. A system according to claim 2 in which the variable delay means are located in the same device as are the control means.

4. A system according to claim 2 or 3 in which the control means is located in the audio device.

5. An audio-visual reception system comprising
a video receiving device (3) operable to receive video signals over a first signal path, including means for extracting timing signals from a received video signal;
an audio receiving device (4) physically separate from the video receiving device and operable to receive audio signals over a second signal path separate from the first, the audio receiving means including means for extracting timing signals from a received audio signal;
variable delay means (44) operable to adjust the differential delay between audio signals output by the audio receiving device and video signals output by the video receiving device;
control means (45) operable to compare the timing signals extracted from the audio signal and those extracted from the video signal and to control the variable delay means in dependence thereon;
wherein one of the devices has at least a transmitter (33) and the other of the devices has at least a receiver (43), that together form a link via which one set of said extracted timing signals can be conveyed to the control means.

6. A system according to claim 5 in which the control means are located in one of the devices and receives the timing signals from the other of the devices via the wireless link.

7. A system according to claim 6 in which the variable delay means are located in the same device as are the control means.

8. A system according to claim 6 or 7 in which the control means is located in the audio device.
